Europäisches Patentamt

European Patent Office

Office européen des brevets

(11) Publication number: **0 520 650 A1**

# EUROPEAN PATENT APPLICATION

(21) Application number: **92305367.2**

(22) Date of filing: **11.06.92**

(51) Int. Cl.⁵: **G06F 13/42**

(30) Priority: **19.06.91 US 717452**

(43) Date of publication of application:
**30.12.92 Bulletin 92/53**

(84) Designated Contracting States:
**DE FR GB IT**

(71) Applicant: **AMERICAN TELEPHONE AND TELEGRAPH COMPANY**
**550 Madison Avenue**
**New York, NY 10022(US)**

(72) Inventor: **McLellan, Hubert Rae, Jr.**
**Raritan River Road, Box 45 RD 2**
**Califon, New Jersey 07830(US)**

(74) Representative: **Buckley, Christopher Simon Thirsk et al**
**AT&T (UK) Ltd. 5 Mornington Road**
**Woodford Green Essex IG8 OTU(GB)**

(54) **Low power signaling using gray codes.**

(57) The invention comprises a method and apparatus for reducing the power consumed by computers in signaling between integrated circuits. Values (e.g. from 102) that are to be transmitted are encoded in a Gray code (by 103) so that when nonrandom or sequentially ordered values are successively transmitted the number of signal transitions is reduced. The invention has applications in DRAM refreshing (e.g. 105), instruction fetching and transferring blocks of data. Circuitry for resolving incongruity in memory mapping using different addressing schemes is shown.

FIG. 1

EP 0 520 650 A1

## Background of the Invention

### Field of the Invention

The invention relates to low power electronic signaling in general and in particular, to a method and apparatus for reducing the power consumption associated with transmitting data between electronic circuits.

### Description of the Prior Art

Electronic computers require electric power to operate and most portable computers obtain their power solely from batteries. But because the storage capacity of a battery is finite, the period for which the computer can operate is limited by the rate at which power is consumed. Thus, a computer can operate for a longer period if it can be designed to be more energy efficient.

A computer is physically composed of electronic devices such as integrated circuits ("ICs") which are interconnected by wires or other conductors of electricity. The ICs perform calculations and the conductors provide a mechanism for transporting data (e.g., numbers, characters) between the ICs. An IC consumes energy when it computes and substantial progress has been made in reducing the power consumption therewith.

An IC also consumes energy when it transmits data to another IC via a conductor. While there is some power consumption associated with *maintaining* a voltage level on a conductor (e.g., keeping the voltage on a wire at either 0 volts or 5 volts), there is substantially more power consumed in the *transition* from one voltage to another (e.g., changing the voltage on a wire from 5 volts to 0 volts or vice versa). Because each transition uses power the total power consumption is proportional to the number of transitions. Additionally, electromagnetic interference, which can hamper the operation of the computer and other electronic devices, is generated by each transition.

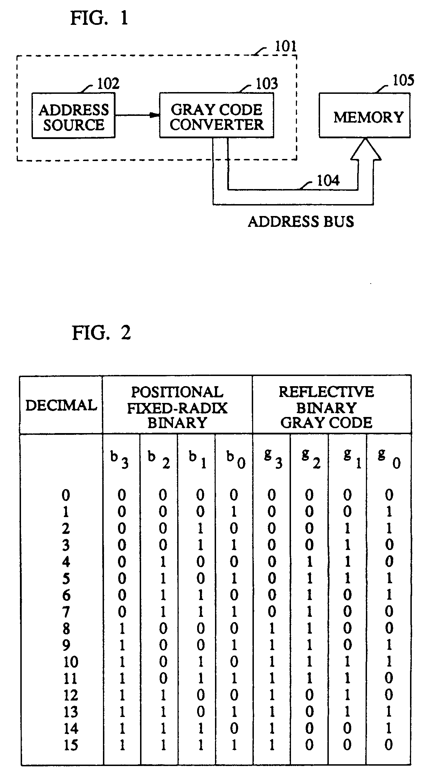

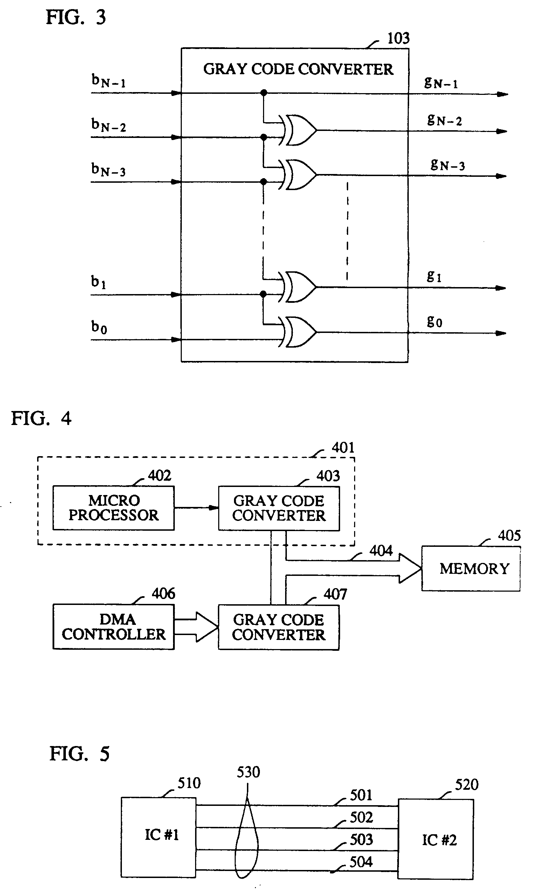

To demonstrate, Fig. 5 shows two ICs, labeled 510 and 520, that are connected by four conductors labeled 501, 502, 503 and 504 respectively. Because the conductors follow parallel paths they are referred to, in the aggregate, as a "bus." When the IC 510 sends a value (e.g., 7) to the IC 520 over the bus 530 the value is represented by a unique pattern of voltages. The patterns for each value can be seen in Fig. 2. Fig. 2 shows the positional fixed radix binary associated with the decimal integers zero through fifteen. The decimal value "7", for example, is represented in positional fixed radix binary by the pattern "0111." Each "0" in the binary represents zero voltage on a particular conductor and each "1" represents five volts. In this case, the IC 510 would send the value "7" to the IC 520 as zero voltage on conductor 501 and five volts on each of conductors 502, 503 and 504.

When the IC 510 sends the value "8" successively after sending "7", as can be seen in Fig. 2, the IC 510 must change the voltage on all four on the conductors because all four bits in the positional fixed radix binary representation of "8" are different than for "7". Therefore, since there are four bits changing there are four signal transitions that each consume power, create electromagnetic interference and cost money. Not a typically, a third of a computer's total power consumption can be incurred from such transitions.

### Summary of the Invention

An object of the invention is to reduce the amount of power consumed by a computer by reducing the number of voltage transitions on a bus.

Another object of the invention is to reduce the number of voltage transitions without reducing the computational capability of the computer.

Yet another object of the invention is to reduce the amount of electromagnetic interference generated by a computer.

The invention is a method and apparatus for transmitting data on a bus whereby a Gray code representation of the data is formed and then placed on the conductors.

### Brief Description of the Drawing

FIG. 1 is a block diagram of an address source which converts its addresses to Gray code before being sent to memory.

FIG. 2 is a table of the numbers 1-15 in decimal, positional fixed radix binary and in reflective binary Gray code.

FIG. 3 is a block diagram of the Gray code converter 103 in FIG. 1.

FIG. 4 is a block diagram of a two devices, one which puts addresses on the bus in a Gray code and one which does not, which can address the same memory.

FIG. 5 is a schematic diagram of two integrated circuits interconnected by a bus.

### Detailed Description

#### I. Inspiration and Theory

The total power consumption incurred by signal transitions is the product of both the inherent power consumption per individual signal transition *and* the total number of individual signal transitions. Thus the total power consumption can be reduced by reducing either factor. The inspiration for the invention is the recognition that in certain cases the number of transitions can be reduced without hindering the functioning of the computer.

As a general proposition, it appears that little can be done to reduce the number of signal transitions where successive values on a bus are usually random (e.g., 14, 5, 42, 73, 21 on the data bus) in contradistinction to usually sequential (e.g., 431, 432, 433 on the address bus) or not random (e.g., 5, 10, 15, 20). For example, the addresses that successively appear on the address bus of a computer are often sequential due to instruction fetching, dynamic RAM refreshing and block transfers of data. Where the values on the bus are often sequential the total number of signal transitions can be reduced by encoding the values in a Gray code.

A Gray code is, by definition, any code in which there is only one individual digit transition between successive values. See F.J. Hill and G.R. Peterson, Introduction to Switching Theory & Logic Design, John Wiley & Sons, 1974 for a discussion on Gray codes. Fig. 2 shows a binary Gray code that in this instance is defined to correspond to the decimal integers zero through fifteen and the positional fixed radix binary integers zero through fifteen. Note, that between sequential Gray codes there is only a one bit difference.

Regardless of the probability of sending transmitted sequential values successively, the overall number of signal transitions when the values are transmitted in a Gray code will be less than or equal to the number when the values are not. The actual savings, if any, will depend upon how often sequential values are sent successively.

## II. Preferred Embodiment #1

Fig. 1 shows a preferred embodiment of the invention in the context of a device that is used for generating addresses for dynamic RAM refreshing. To assure that the data stored within a dynamic RAM is not lost it is necessary that each and every memory location within the RAM be periodically refreshed. This is done by addressing each memory location.

An address source 102, such as a counter, generates and presents addresses, *not directly* to the address bus 104 as in the prior art, but via a Gray code converter 103. Both the address source 102 and the Gray code converter 103 are implemented on a single integrated circuit 101. The address source 102 cyclically generates all of the addresses in positional fixed-radix binary (henceforth "straight binary").

Fig. 2 shows the straight binary and a binary Gray code corresponding to the decimal integers zero through fifteen. There are $2^N \times N!$ N-bit binary Gray codes that can be used to encode the N-bit straight binary addresses. Although all are satisfactory, the "reflective binary Gray code" (henceforth "reflective binary") is preferred because of the ease in which it can be generated directly from straight binary. An example of reflective binary is presented in Fig. 2.

Fig. 3 shows the detail of the Gray code converter 103 in Fig. 1. Inside the Gray code converter 103 is a schematic for forming the N-bit reflective binary representation of an N-bit straight binary number with N-1 Boolean XOR gates. The output of an XOR gate is a boolean one if and only if one of the two inputs is a boolean one. When the straight binary number is represented by the string of bits $b_{n-1}b_{n-2}...b_1b_0$ such that the decimal equivalent is

$$\sum_{i=0}^{n-1} b_i \times 2^i,$$

then the corresponding reflective binary Gray code is represented by the string of bits $g_{n-1}g_{n-2}...g_1g_0$. For example, the four bit straight binary number "0111" would be converted to the reflective binary number "0100". The Gray code converter 103 creates the reflective binary form of the address and then puts it on the address bus 104 as an index into memory 105.

It is not important for dynamic RAM refreshing that the memory locations be addressed in any particular order, just that they be addressed at all. As a result it is not necessary that the addresses be reconverted back into straight binary before being used as an index to memory. This embodiment cuts the number of individual signal transitions in half when compared with the prior art.

## III. Preferred Embodiment #2

The meaning of data within a memory is dependent upon the context with which it is stored or "mapped" into the memory. For example, when a processor reads and writes data to a memory using a particular coding scheme (e.g., straight binary addressing) it is establishing that scheme as the order of the memory. If one microprocessor wrote data to a memory using straight binary addressing and another microprocessor that used Gray code addressing attempted to the read from the same memory, the data would be meaningless because of the incongruity of the two mapping schemes. For example, a microprocessor with a straight binary addressing scheme stores a value indicating the temperature 68 in memory location 5 ("101" in straight binary) and a value indicating the humidity 48 in memory location 7 ("111" in straight binary). A second microprocessor with a Gray code addressing scheme desires to read the temperature and reads memory location 5. But location 5 is "111" in its addressing scheme and the value retrieved, 48, is incorrectly interpreted as the temperature.

Incongruity is not a problem when all of the devices addressing a memory have a consistent addressing scheme. It should be noted, however, that a Gray code converter effectively changes the addressing scheme of the device with which it is associated to a Gray code scheme. Therefore, if a processor with a Gray code converter is addressing the same space as another processor without a Gray code converter or a Gray code addressing scheme then an addressing incongruity occurs. This embodiment resolves the incongruity between two such devices.

Fig. 4 shows an integrated circuit 401 which includes a microprocessor 402 and a Gray code converter 403. The microprocessor 402 sends a straight binary address to the Gray code converter 403 where the reflective binary form of the address is created and put on the address bus 404. The Gray code converter 403 is designed exactly like the Gray code converter shown in Fig. 3. The microprocessor 402 and the Gray code converter 403 are on a single integrated circuit 401.

Another integrated circuit is the DMA controller 406. The DMA controller 407 has a straight binary addressing scheme and is not capable of operating under a reflective binary scheme. To avoid the memory mapping incongruency referred to above, the straight binary addresses from the DMA controller 406 are put through a Gray code converter 407 on another integrated circuit. The Gray code converter 407 is identical to that shown in Fig. 3. The Gray code converter 407 forms the reflective binary address from the straight binary address and then puts the reflective binary form on the address bus 404. Thus, both devices which can and cannot independently generate addresses in reflective binary can address the same memory space without an incongruity problem.

## Claims

1. A method for transmitting values on a bus 104 comprising the steps of:
     for each one of the values, forming a Gray code representation of the value; and
     placing the Gray code representation on the bus 104.

2. The method of claim 1 wherein:
     the Gray code representation is formed from a positional fixed radix binary representation of the value.

3. The method of claim 2 wherein:
     the Gray code representation formed is the reflective binary Gray code representation.

4. The method of claim 1 wherein:
     the Gray code representation is placed on the bus 104 for addressing.

5. The method of claim 4 wherein:
     the Gray code representation is placed on the bus 104 for addressing a memory 105.

6. The method of claim 5 wherein: the Gray code representation is placed on the bus 104 for addressing the memory 105 in a refresh operation.

7. An apparatus for transmitting values on a bus 104 comprising:
     a first means 102 for providing the values; and
     a second means 103, receptive to the output of the first means 102, for forming a Gray code representation of each one of the provided values and for placing the Gray code representation on the bus 104.

8. The apparatus of claim 7 wherein:
     the values provided by the first means 102 are in positional fixed radi/binary representation.

9. The apparatus of claim 8 wherein:
     the Gray code representation formed by the second means 103 is a reflective binary representation of each one of the provided values.

10. The apparatus of claim 7 wherein:
     the Gray code representation is used for addressing.

11. The apparatus of claim 7 further comprising:
     a memory 105 addressed by the Gray code representation.

12. The apparatus of claim 11 wherein:
     the memory 105 is addressed in a refresh operation. /* McLellan 8*/

## FIG. 1

## FIG. 2

| DECIMAL | POSITIONAL FIXED-RADIX BINARY | | | | REFLECTIVE BINARY GRAY CODE | | | |
|---|---|---|---|---|---|---|---|---|
| | $b_3$ | $b_2$ | $b_1$ | $b_0$ | $g_3$ | $g_2$ | $g_1$ | $g_0$ |
| 0 | 0 | 0 | 0 | 0 | 0 | 0 | 0 | 0 |
| 1 | 0 | 0 | 0 | 1 | 0 | 0 | 0 | 1 |
| 2 | 0 | 0 | 1 | 0 | 0 | 0 | 1 | 1 |
| 3 | 0 | 0 | 1 | 1 | 0 | 0 | 1 | 0 |
| 4 | 0 | 1 | 0 | 0 | 0 | 1 | 1 | 0 |
| 5 | 0 | 1 | 0 | 1 | 0 | 1 | 1 | 1 |
| 6 | 0 | 1 | 1 | 0 | 0 | 1 | 0 | 1 |
| 7 | 0 | 1 | 1 | 1 | 0 | 1 | 0 | 0 |
| 8 | 1 | 0 | 0 | 0 | 1 | 1 | 0 | 0 |
| 9 | 1 | 0 | 0 | 1 | 1 | 1 | 0 | 1 |
| 10 | 1 | 0 | 1 | 0 | 1 | 1 | 1 | 1 |
| 11 | 1 | 0 | 1 | 1 | 1 | 1 | 1 | 0 |
| 12 | 1 | 1 | 0 | 0 | 1 | 0 | 1 | 0 |
| 13 | 1 | 1 | 0 | 1 | 1 | 0 | 1 | 1 |
| 14 | 1 | 1 | 1 | 0 | 1 | 0 | 0 | 1 |
| 15 | 1 | 1 | 1 | 1 | 1 | 0 | 0 | 0 |

## FIG. 3

## FIG. 4

## FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4 528 665 (BURNS ET AL.)<br>* column 1, line 7 - line 10 *<br>* column 2, line 10 - line 16 *<br>* column 3, line 28 - line 45 *<br>* column 3, line 52 - line 65 *<br>* column 6, line 36 - column 7, line 11 *<br>* claim 1; figures 1A-1B *<br>--- | 1-12 | G06F13/42 |
| X | EP-A-0 391 584 (NCR CORPORATION)<br>* page 2, line 19 - line 27 *<br>* page 2, line 52 - page 3, line 5 *<br>* page 5, line 32 - page 6, line 43 *<br>* claim 1; figure 1 *<br>--- | 1-5,7-11 | |
| X | US-A-4 556 960 (COHN ET AL.)<br>* column 1, line 38 - column 2, line 2 *<br>* column 8, line 30 - line 44 *<br>* figures 1-2 *<br>----- | 1-5,7-11 | |
| | | | **TECHNICAL FIELDS SEARCHED (Int. Cl.5 )**<br><br>G06F |

The present search report has been drawn up for all claims

| Place of search | Date of completion of the search | Examiner |
|---|---|---|
| THE HAGUE | 08 OCTOBER 1992 | NGUYEN Xuan Hiep |

EPO FORM 1503 03.82 (P0401)